# EUROPÄISCHE PATENTANMELDUNG

(11) **EP 0 810 236 A2**
(43) Veröffentlichungstag der Anmeldung: **03.12.1997**
(21) Anmeldenummer: 97108715.0
(22) Anmeldetag: 30.05.1997
(51) Int. Cl.: C08F 8/00, C08C 19/00

(54) **Verfahren zur Hydroformylierung ethylenisch ungesättigter Polymere in wässriger Dispersion**

(30) Priorität: 31.05.1996 DE 19622061
(71) Anmelder: BASF AKTIENGESELLSCHAFT, 67056 Ludwigshafen (DE)
(72) Erfinder: Zeller, Edgar, Dr., 68163 Mannheim (DE); Leube, Hartmann F., Dr., 67061 Ludwigshafen (DE); Schlarb, Bernhard, Dr., 67067 Ludwigshafen (DE); Kneuper, Heinz-Josef, Dr., 68163 Mannheim (DE); Röper, Michael, Dr., Prof., 67157 Wachenheim (DE)
(74) Vertreter: Kinzebach, Werner, Dr.

(57) **Zusammenfassung**

Die vorliegende Erfindung betrifft ein Verfahren zur Hydroformylierung von Polymerisaten, die ethylenisch ungesättigte Doppelbindungen enthalten, durch Umsetzung wäßriger Dispersionen der Polymerisate mit Wasserstoff und Kohlenmonoxid in Gegenwart geeigneter Hydroformylierungskatalysatoren.

Die Erfindung betrifft weiterhin die nach diesem Verfahren erhältlichen Polymerisatdispersionen sowie die hydroformylierten Polymerisate selbst.

## Beschreibung

Die vorliegende Erfindung betrifft ein Verfahren zur Hydroformylierung von Polymerisaten, die ethylenisch ungesättigte Doppelbindungen enthalten.

Die Hydroformylierung von Polymerisaten mit ethylenisch ungesättigten Doppelbindungen ist ein wichtiges Verfahren zur Funktionalisierung solcher Polymerisate, die in der Regel in großtechnischem Maßstab hergestellt werden, deren Umsetzungsprodukte jedoch durch direkte Polymerisation entsprechender Monomere oft nur schwer herzustellen sind. Derart funktionalisierte Polymere erlauben ihrerseits die Anwendung neuer polymeranaloger Reaktionen, wie z.B. neue Methoden der Vernetzung, die Umwandlung in oder die Anbringung von neuen Funktionalitäten, die dem Polymerisat neue Eigenschaften verleihen.

Verfahren zur Hydroformylierung von Polymerisaten mit ethylenisch ungesättigten Doppelbindungen sind im Prinzip bekannt. M.P. McGrath et al. beschreiben die sukzessive Hydroformylierung und Hydrierung von EPDM-Polymerisaten und Polybutadienen mit HRhCO(PPh₃)₃ oder Rh(CO)₂acac (acac ≙ acetylacetonato) als Hydroformylierungskatalysator in Toluol (J. Appl. Polym. Sci. 56, (1995) 533-543). Die Hydroformylierung wird in Substanz oder in Toluol durchgeführt.

Die Hydroformylierung niedermolekularer Polybutadiene gelingt nach P.L. Mills et al. mit Wilkinson's Katalysator und einem Überschuß an Triphenylphosphin in Toluol (Ind. Eng. Chem. Res. 29, (1990) 1443-1454).

Auch dem Verfahren zur Carboxylierung von syndiodaktischem 1,2-Polybutadien mit einer Teilchengröße von weniger als 250 µm (US-A-4,912,145) liegt in einem ersten Schritt eine Hydroformylierung zugrunde. Die Polymerisate werden als Suspension in organischem Medium umgesetzt.

F. Sibtain et al., (J. Polym. Sci. Part A, Polymer Chemistry, Vol. 29, (1991) 629-635) beschreiben die Hydroformylierung verschiedener Styrol/Butadien-Blockcopolymere mit HRh(CO)(PPh₃)₃ als Hydroformylierungskatalysator in Toluol.

Die Hydroformylierung von Polymeren, wie 1,4-Polybutadien, Styrol-Butadien-Copolymeren und Ethylacrylat-Butadien-Copolymeren, mittels Cobaltkatalysatoren wird von Floyd L. Ramp et al., (J. Polym. Sci. Part A-1, 4 (1966) 2267) beschrieben. Hierbei wird Gelbildung durch Aldolkondensation beobachtet, die hydroformylierten Polymere zeichnen sich also durch Unlöslichkeit aus.

Übersichten über die Hydroformylierung von Polymerisaten mit olefinisch ungesättigten Doppelbindungen, wie Polyisopren oder Styrol-Butadien-Copolymere, geben N.T. McManus et al. (J. Macromol. Sci., Rev. Macromol. Chem. Phys. C35(2) (1995) 239-285) und die US-A-4,914,157. Allen beschriebenen Verfahren ist jedoch gemeinsam, daß die Umsetzung in einem organischen Medium, sei es als homogene Reaktion des gelösten Polymers oder als heterogene Reaktion des suspendierten Polymers, oder in Substanz durchgeführt wird.

Eine Übertragung der Hydroformylierung von Polymeren auf wäßrige Systeme erscheint aus verschiedenen Gesichtspunkten wünschenswert. So lassen sich auf der einen Seite wäßrige Polymerdispersionen oftmals direkt durch Emulsionspolymerisation herstellen. Auf der anderen Seite stellt die Verwendung von Lösungsmitteln bei der Produktion einen nicht unwesentlichen Kostenfaktor dar, ihre Vermeidung erscheint aus arbeitshygienischen Gründen und Umweltschutzaspekten wünschenswert.

Die Hydroformylierung von Polymerisaten in wäßriger Dispersion wurde jedoch bisher für nicht möglich erachtet. Ein Grund dafür wurde darin gesehen, daß Polymerisate für eine erfolgreiche Hydroformylierung in gelöstem oder geschmolzenem, zumindest aber in gequollenem Zustand vorliegen müssen, damit die Reaktion mit Kohlenmonoxid und Wasserstoff möglich wird. Dies ist bei der Hydroformylierung in Lösung oder Suspension in einem organischen Medium, nicht aber bei einer wäßrigen Polymerisatdispersion der Fall und deshalb wurde die Hydroformylierung von hydrophoben Polymerisaten, wie schon erwähnt, bisher stets in einem organischen Medium oder in Substanz durchgeführt.

Diese Auffassung wird z.B. von B. Cornils in Angew. Chem. 1995, 107, 1709-1711 bestätigt. Es wird ausgeführt, daß bei einer Zweiphasenkatalyse die Verwendung von Wasser als zweiter Phase dann ihre Grenze findet, wenn die Edukte, hier die Polymerisate, zu wenig wasserlöslich sind und damit der Transfer von organischem Substrat in die wäßrige Phase oder an die Grenzflächen behindert und die Reaktionsgeschwindigkeit uninteressant wird. Im Falle der Zweiphasenhydroformylierung von Olefinen scheint diese Grenze beim Dodecen erreicht zu sein.

Überraschenderweise wurde nun gefunden, daß die Hydroformylierung von wäßrigen Polymerisatdispersionen möglich ist, wenn man die Hydroformylierungsbedingungen so wählt, daß der Katalysator zumindest teilweise in die Grenzfläche Polymerphase/Wasser eindringt oder sie überschreitet.

Gegenstand der vorliegenden Erfindung ist daher ein Verfahren zur Hydroformylierung von Polymerisaten, die ethylenisch ungesättigte Doppelbindungen enthalten, durch Umsetzung der Polymerisate mit Kohlenmonoxid und Wasserstoff in Gegenwart eines Hydroformylierungskatalysators, das dadurch gekennzeichnet ist, daß man die Umsetzung in einer wäßrigen Dispersion der Polymerisate unter solchen Bedingungen durchführt, daß der Katalysator wenigstens teilweise in die Polymerphase oder wenigstens in die Phasengrenze Polymer/Wasser eindringt. Dies kann durch Wahl des Katalysators und der Hydroformylierungsbedingungen (Druck und Temperatur) erreicht werden. Nach Beller et al (J. Mol. Catal. A 104 (1995) 20 f.) werden unter Hydroformylierungsbedingungen aus den jeweils eingesetzten Katalysatoren oder Katalysatorvorstufen katalytisch aktive Spezies der allgemeinen Formel HₓM_{y}(CO)_{z}L_{q}, worin M für das jeweilige Katalysatormetall, L für gegebenenfalls anwesende modifizierende Liganden und q, x, y, z für ganze Zahlen, abhängig von Wertigkeit und Art des Metalls sowie der Bindungsstärke des Liganden L, stehen. Diese Spezies sind in der Lage, wenigstens teilweise in die Polymerphase oder in den Phasengrenzbereich Wasser/Polymer einzudringen. Dies ist z.B. bei Rhodiumkatalysatoren der Fall, die in der Regel in sogenanntes "nacktes Rhodium" [RhH(CO)₄] überführt werden. Entsprechend werden Cobaltkatalysatoren in [HCo(CO)₄] überführt (siehe Beller et al.).

Alternativ kann man die Liganden des Katalysators so wählen, daß er lipophilen Charakter annimmt und deshalb in der Lage ist, in die Polymerphase überzugehen.

Für das erfindungsgemäße Verfahren sind im Prinzip alle Katalysatoren geeignet, welche die aktive Spezies unter den Reaktionsbedingungen nicht in der Wasserphase binden. Geeignete Katalysatoren oder Katalysator-Vorstufen sind in der Regel Salze oder Komplexverbindungen des Cobalts, Rhodiums, Rutheniums, Osmiums, Iridiums, Palladiums oder des Platins, letzteres gegebenenfalls in Verbindung mit Zinnsalzen. Bevorzugt werden Salze oder Komplexverbindungen des Cobalts, des Rhodiums oder des Rutheniums, insbesondere des Rhodiums. Geeignete Salze sind beispielsweise die Hydride, Halogenide, Nitrate, Sulfate, Oxide, Sulfide oder die Salze mit Alkyl- oder Arylcarbonsäuren oder Alkyl- oder Arylsulfonsäuren. Geeignete Komplexverbindungen sind beispielsweise die Carbonylverbindungen der genannten Metalle sowie Komplexe mit Amin, Triarylphosphin, Trialkylphosphin, Olefin, oder Dienen als Liganden. Auch sind Katalysatorsysteme bekannt, die in situ aus den obengenannten Salzen und den genannten Liganden hergestellt werden.

Unter Alkyl versteht man hier und im folgenden vorzugsweise lineares oder verzweigtes C₁-C₁₂-Alkyl, insbesondere C₁-C₆-Alkyl, z.B. Ethyl, n-Propyl, i-Propyl, n-Butyl, 2-Butyl, i-Butyl, tert.-Butyl, Pentyl, n-Hexyl, 2-Ethylhexyl. Cycloalkyl steht vorzugsweise für C₃-C₁₀-Cycloalkyl, insbesondere Cyclopentyl und Cyclohexyl, die gegebenenfalls auch mit C₁-C₄-Alkylgruppen substituiert sein können. Unter Aryl versteht man vorzugsweise Phenyl (Ph) oder Naphthyl, das gegebenenfalls mit 1, 2, 3 oder 4 C₁-C₄-Alkyl, vorzugsweise Methyl, Ethyl, i-Propyl, t-Butyl, C₁-C₄-Alkoxy, z.B. Methoxy, Halogen, vorzugsweise Chlorid, oder Hydroxy, das gegebenenfalls auch ethoxyliert sein kann, substituiert ist.

Geeignete Rhodiumkatalysatoren bzw. -katalysatorvorstufen sind Rhodium(II)- und Rhodium(III)salze wie Rhodium(III)chlorid, Rhodium(III)nitrat, Rhodium(III)sulfat, Kalium-Rhodiumsulfat (Rhodiumalaun), Rhodium(II)- bzw. Rhodium(III)carboxylat, vorzugsweise Rhodium(II)- und Rhodium(III)acetat, Rhodium(III)oxid, Salze der Rhodium(III)säure, Trisammoniumhexachlororhodat(III).

Weiterhin eignen sich Rhodiumkomplexe der allgemeinen Formel RhXₘL¹L²(L³)ₙ, worin X für Halogenid, vorzugsweise Chlorid oder Bromid, Alkyl- oder Arylcarboxylat, Acetylacetonat, Aryl- oder Alkylsulfonat, insbesondere Phenylsulfonat und Toluolsulfonat, Hydrid oder das Diphenyltriazin-Anion,
m für 1 oder 3 und n für 0, 1 oder 2,
L¹, L², L³ unabhängig voneinander für CO, Olefine, Cycloolefine, vorzugsweise Cyclooctadien (COD), Dibenzophosphol, Benzonitril, PR₃ oder R₂P-A-PR₂ stehen. In den Liganden der Formenln PR₃ oder R₂P-A-PR₂ stehen R (die Reste R können gleich oder verschieden sein) für Alkyl, Cycloalkyl und Aryl, vorzugsweise Phenyl, p-Tolyl, m-Tolyl, p-Ethylphenyl, p-Cumyl, p-tert.-Butylphenyl, p-C₁-C₄-Alkoxyphenyl, vorzugsweise p-Anisyl, Xylyl, Mesityl, p-Hydroxyphenyl, das gegebenenfalls auch ethoxyliert vorliegen kann, Isopropyl, C₁-C₄-Alkoxy, Cyclopentyl oder Cyclohexyl und A für 1,2-Ethylen oder 1,3-Propylen. Bevorzugt stehen L¹, L² oder L³ unabhängig voneinander für CO, COD, P(Phenyl)₃, P(i-Propyl)₃, P(Anisyl)₃, P(OC₂H₅)₃, P(Cyclohexyl)₃, Dibenzophosphol oder Benzonitril. X steht bevorzugt für Hydrid, Chlorid, Bromid, Acetat, Tosylat, Acetylacetonat oder das Diphenyltriazin-Anion, insbesondere für Hydrid, Chlorid oder Acetat. Besonders bevorzugte Rhodiumkomplexe sind beispielsweise RhCl(PPh₃)₃, RhCl(CO)(PPh₃)₂, RhH(CO)(PPh₃)₃ und RhH(PPh₃)₄. Für das erfindungsgemäße Verfahren können auch die Rhodiumcarbonylverbindungen wie Tetrarhodiumdodecacarbonyl oder Hexarhodiumhexadecacarbonyl eingesetzt werden.

Für das erfindungsgemäße Verfahren eignen sich ebenfalls Rutheniumsalze oder Verbindungen. Geeignete Rutheniumsalze sind beispielsweise Ruthenium(III)chlorid, Ruthenium(IV)-, Ruthenium(VI)- oder Ruthenim(VIII)oxid, Alkalisalze der Rutheniumsauerstoffsäuren wie K₂RuO₄ oder KRuO₄ oder Komplexverbindungen der allgemeinen Formel RuX¹X²L¹L²(L³)ₙ, worin L¹, L², L³ und n die oben angegebenen Bedeutungen und X¹, X² die für X (siehe angegebenen Bedeutungen besitzen, z.B. RuHCl(CO)(PPh₃)₃. Auch können die Metallcarbonyle des Rutheniums wie Trisrutheniumdodecacarbonyl oder Hexarutheniumoctadecacarbonyl, oder Mischformen, in denen CO teilweise durch Liganden der Formel PR₃ ersetzt sind, wie Ru(CO)₃(PPh₃)₂, im erfindungsgemäßen Verfahren verwendet werden.

Geeignete Cobaltverbindungen sind beispielsweise Cobalt(II)chlorid, Cobalt(II)sulfat, Cobalt(II)nitrat, deren Amin- oder Hydratkomplexe, Cobaltcarboxylate, wie Cobaltacetat, Cobaltethylhexanoat, Cobaltnaphthanoat, sowie der Cobalt-Caprolactamat-Komplex. Auch hier können die Carbonylkomplexe des Cobalts wie Dicobaltoctacarbonyl, Tetracobaltdodecacarbonyl und Hexacobalthexadecacarbonyl eingesetzt werden.

Die genannten Verbindungen des Cobalts, Rhodiums und Rutheniums sind im Prinzip bekannt und in der Literatur hinreichend beschrieben oder sie können vom Fachmann analog zu den bereits bekannten Verbindungen hergestellt werden.

Geeignete Palladiumverbindungen sind beispielsweise die in der Arbeit von McManus (S. 260, siehe oben) in Tabelle 8 zusammengestellten Verbindungen sowie Palladiumhydrid, Palladiumchlorid, Palladiumiodid, Palladiumnitrat, Palladiumcyanid, Palladiumacetat, Palladiumsulfat oder Palladiumoxid. Geeignete Platinverbindungen sind beispielsweise Platin(IV)-Verbindungen, wie die Salze der Hexachloroplatinsäure mit Alkalimetallen oder Ammoniumionen, Platin(IV)oxid oder Salze der Platin(IV)säure. Weiterhin eignen sich Platin(II)iodid und die daraus durch Umsetzung mit Olefinen erhaltenen Komplexe wie beispielsweise die Alkalisalze des Trichlormonoethylenplatins. Bei Verwendung von Platinkatalysatoren empfiehlt sich die Anwesenheit eines Zinn(II)salzes wie beispielsweise Zinn(II)chlorid.

Als Substrate für das erfindungsgemäße Hydroformylierungsverfahren kommen prinzipiell alle jene Polymerisate mit ethylenisch ungesättigten Doppelbindungen in Betracht, welche in wäßriger Dispersion hergestellt werden (Primärdispersionen) und solche, die in eine wäßrige Dispersion überführt werden können (Sekundärdispersionen).

Geeignete Polymerisate, die ethylenisch ungesättigte Doppelbindungen enthalten, sind beispielsweise Homo- oder Copolymerisate konjugierter Diene, die vorzugsweise 10 bis 100 Gew.-%, insbesondere 20 bis 80 Gew.-% wenigstens eines konjugierten Diens A und 0 bis 90 Gew.-%, insbesondere 20 bis 80 Gew.-%, damit copolymerisierbare, monoethylenisch ungesättigte Monomere oder Monomermischungen B einpolymerisiert enthalten. Hierbei kann die Monomermischung B in geringem Maße, vorzugsweise bis zu 10 Gew.-%, insbesondere bis zu 5 Gew.-% und speziell 0,2 bis 3 Gew.-% bezogen auf die Gesamtmonomermenge aus A und B Monomere B' enthalten, deren Homopolymerisate wasserlöslich sind. Bei der Dienkomponente A handelt es sich vorzugsweise um Butadien, Isopren, Chloropren, 1-Methylbutadien, 2,3-Dimethylbutadien, 2-(Tri-C₁-C₄-alkoxysilyl)butadien oder deren Mischungen. Geeignete Monomere B sind Olefine, z.B. Ethylen, Propylen, n-Buten, vorzugsweise Isobuten, vinylaromatische Monomere, wie Styrol, α-Methylstyrol, o-Chlorstyrol oder Vinyltoluole, C₁-C₁₂-Alkylvinylether, wie Methyl-, Ethyl-, n-Propyl-, i-Propyl-, n-Butyl-, i-Butyl-, 2-Ethylhexylvinylether, Vinylester von C₁-C₁₈-Monocarbonsäuren, wie Vinylacetat, Vinylpropionat, Vinylbutyrat, Vinylvalerat, Vinylhexanoat, Vinyl-2-ethylhexanoat, Vinyldecanoat, Vinyllaurat und Vinylstearat. Weiterhin kommen Ester α,β-ethylenisch ungesättigter C₃-C₁₀-Mono- oder Dicarbonsäuren mit C₁-C₁₂-, vorzugsweise C₁-C₈- und insbesondere C₁-C₄-Alkanolen in Frage. Auch können Ester dieser Säuren mit C₅-C₈-Cycloalkanolen verwendet werden. Geeignete Alkanole sind beispielsweise Methanol, Ethanol, n-Propanol, iso-Propanol, 1-Butanol, 2-Butanol, iso-, t-Butanol, n-Hexanol, 2-Ethylhexanol, Cyclopentanol und Cyclohexanol. Geeignet sind vorzugsweise Ester der Acrylsäure, der Methacrylsäure, der Maleinsäure, der Fumarsäure und der Itaconsäure. Speziell handelt es sich um (Meth)acrylsäuremethylester, (Meth)acrylsäureethylester, (Meth)acrylsäure-n-butylester, (Meth)acrylsäure-iso-butylester und (Meth)acrylsäure-2-ethylhexylester, Maleinsäuredimethylester oder Maleinsäuredi-n-butylester. Weiterhin kommen Nitrile α,β-monoethylenisch ungesättigter Carbonsäuren, wie Acrylnitril oder Methacrylnitril in Betracht. Bei den in untergeordnetem Maße vorliegenden Monomeren B' handelt es sich beispielsweise um α,β-ungesättigte C₃-C₁₀-Mono- oder Dicarbonsäuren oder deren Amide, vorzugsweise Acrylsäure, Methacrylsäure, Maleinsäure, Fumarsäure, Itaconsäure, Acrylamid oder Methacrylamid, sowie N-Vinyllactam, z.B. N-Vinylpyrrolidon. Weiterhin eignen sich als Monomere B' die Salze von ethylenisch ungesättigten Alkyl- oder Arylsulfonsäuren wie Vinylsulfonsäure, Methallylsulfonsäure, Vinylbenzolsulfonsäure, Acrylamidosulfonsäure etc.

Besonders geeignete Monomerkombinationen für Polymerisatdispersionen sind beispielsweise Butadien mit Styrol; Butadien mit Acrylnitril und/oder Methacrylnitril; Butadien und Isopren mit Acrylnitril und/oder Methacrylnitril; Butadien mit Isobuten; Butadien mit (Meth)acrylsäureestern; wobei alle genannten Monomerkombinationen geringe Mengen der Monomere B', vorzugsweise (Meth)acrylsäure und/oder deren Amide enthalten können.

Die Herstellung solcher Polymerisate ist dem Fachmann bekannt und kann durch anionische, kationische, radikalische oder Ziegler-Natta-Polymerisation in Lösung, in Substanz, in Suspension oder in Emulsion durchgeführt werden. Hierbei liegen die konjugierten Diene 1,4-polymerisiert oder 1,2-polymerisiert vor, abhängig vom gewählten Reaktionstyp.

Für das erfindungsgemäße Verfahren werden Polymerisate bevorzugt, die durch radikalische Bmulsionspolymerisation (einschließlich Mini- und Mikroemulsionspolymerisation) hergestellt wurden. Diese Verfahren sind dem Fachmann hinreichend bekannt und in der Literatur ausführlich beschrieben, beispielsweise in Ullmanns Encyclopedia of Industrial Chemistry 5ed., Vol. A21, S. 373-393. In der Regel werden solche Polymerisationen in Gegenwart von Radikalinitiatoren, beispielsweise Peroxoverbindungen, Azoverbindungen oder Redoxsystemen, oberflächenaktiven Substanzen wie Tensiden und Schutzkolloiden (siehe beispielsweise Houben-Weyl, Methoden der organischen Chemie, Bd. XIV/1, Makromolekulare Stoffe, Georg-Thieme-Verlag, Stuttgart, 1961, S. 192-208) durchgeführt. Zur Regelung des Molekulargewichts der erhaltenen Polymerisate können dem Medium Verbindungen zugesetzt werden, die das Molekulargewicht regeln, beispielsweise organische Thioverbindungen wie Dodecylmercaptan.

Eine andere Klasse von Polymerisaten, die sich zur Umsetzung im erfindungsgemäßen Verfahren eignen, sind Copolymerisate, die als Hauptbestandteil monoethylenisch ungesättigte Monomere B und als Nebenbestandteil nicht konjugierte Diene oder Polyene C einpolymerisiert enthalten. Hierbei gilt für die monoethylenisch ungesättigten Monomere B das bereits gesagte. Als nicht konjugierte Diene oder Polyene C kommen insbesondere solche Diene oder Polyene in Betracht, deren Doppelbindungen unterschiedliche Reaktivitäten aufweisen. Geeignete Monomere C sind beispielsweise Vinylester α,β-ungesättigter Mono- oder Dicarbonsäuren, z.B. Vinyl(meth)acrylat, Diolefine wie Dicyclopentadien, Vinylnorbonien, Hexa-1,6-dien. Terpolymere der letztgenannten Monomere mit Ethylen oder Propylen sind unter dem Begriff EPDM-Kautschuke bekannt und komnerziell erhältlich.

Eine weitere geeignete Klasse von Polymerisaten mit ethylenisch ungesättigten Doppelbindungen sind ungesättigte Polyester. Diese sind durch Copolykondensation von Diolen und Dicarbonsäuren erhältlich, wobei ein Teil der Dicarbonsäurekomponente aus ungesättigten Dicarbonsäuren besteht (vgl. Römpp Chemie-Lexikon, 9. Aufl., "Ungesättigte Polyester"). Polykondensate, die Maleinsäureanhydrid oder Fumarsäure mit einkondensiert enthalten, sind beispielsweise unter dem Namen Norsodyne® (CdF-Chimie, Paris) kommerziell erhältlich.

Eine weitere geeignete Klasse von Polymerisaten mit ethylenisch ungesättigten Doppelbindungen sind die Propylenoxidkautschuke, die durch Copolymerisation von Propylenoxid mit untergeordneten Mengen ungesättigter Oxirane, beispielsweise Glycidylallylether, hergestellt werden. Ein Produkt aus 40 Teilen Propylenoxid und 1 Teil Glycidylallylether ist unter dem Namen Parel 58® (Goodridge) kommerziell erhältlich. Ähnliche Polymere sind auch mit Ethylenoxid bekannt.

Eine weitere Klasse geeigneter ethylenisch ungesättigter Polymerisate sind die durch Metathesereaktion von Cycloalkenen und gegebenenfalls Copolymeren erhältlichen Polycycloalkenamere (siehe Houben-Weyl, E20/2, 918-927). Als Monomere werden beispielsweise Cyclobuten, Cyclopenten, Cycloocten, Norbonen und Dicyclopentadien verwendet. Polycyclopentenamere sind beipielsweise unter dem Handelsnamen Vestenamer® (Hüls AG, Marl) oder Norsorex® (CdF-Chimie, Paris) kommerziell erhältlich.

Alle genannten Polymerklassen können direkt durch Polymerisation oder Polykondensation erhalten werden. Es ist jedoch auch möglich, die genannten Polymere vor ihrer Verwendung in der erfindungsgemäßen Hydroformylierungsreaktion noch chemisch zu modifizieren. Auch können die ethylenisch ungesättigten Doppelbindungen durch polymeranaloge Reaktionen, beispielsweise durch Eliminierung oder durch Veretherung oder Veresterung von OH-Gruppen oder Carboxylgruppen im Polymer mit Allylhalogeniden, Allylalkoholen oder Säurehalogeniden α,β-ungesättigter Carbonsäuren eingeführt werden.

In den erfindungsgemäß zu verwendenden Polymerdispersionen liegt der mittlere Durchmesser der Polymerpartikel im allgemeinen im Bereich von 10 nm bis 100 µm, vorzugsweise 10 nm bis 1 µm. Der Begriff "Polymerdispersion" umfaßt auch Mikrokapseln. Der Feststoffgehalt der Polymerdispersionen ist im Prinzip nicht eingeschränkt, er beträgt im allgemeinen jedoch nicht mehr als 75 Gew.-%. Von besonderer Bedeutung sind Polymerdispersionen mit Feststoffgehalten im Bereich von 40 bis 70 Gew.-%. Die Polymerdispersionen enthalten in der Regel noch oberflächenaktive Substanzen sowie weitere Stoffe, die beispielsweise bei Emulsionspolymerisationen als übliche Polymerisationshilfsmittel verwendet werden (siehe oben). Auch wenn diese Stoffe sich in der Regel im erfindungsgemäßen Verfahren nicht störend auswirken, empfiehlt es sich, die Polymerdispersionen zuvor chemisch oder physikalisch zu desodorieren.

Die Durchführung der Hydroformylierung erfolgt in der Regel so, daß man einen Katalysator oder eine Katalysatorvorstufe, sowie gegebenenfalls einen der unter L¹, L² oder L³ genannten Liganden, zu der Polymerdispersion, die man gegebenenfalls auf den geeigneten Feststoffgehalt eingestellt hat, gibt, anschließend den gewünschten Wasserstoff- und Kohlenmonoxid-Druck einstellt und auf die geeignete Reaktionstemperatur erhitzt. Die Reaktion wird in der Regel bei einem Partialdruck des Reaktionsgases im Bereich von Normaldruck bis 600 bar, vorzugsweise 20 bis 300 bar, abhängig vom jeweils verwendeten Katalysator und von der Reaktivität der in den Polymeren enthaltenen Doppelbindung, und Temperaturen im Bereich von 20°C bis 200°C, vorzugsweise 50°C bis 150°C, durchgeführt. Bei Liganden-modifizierten Katalysatorsystemen liegt der Druck in der Regel niedriger, vorzugsweise im Bereich von 1 bis 100 bar, bei nacktem Rhodium ca. 50 bis 600 bar.

Das molare Verhältnis von Kohlenmonoxid und Wasserstoff beträgt im Reaktionsgas in der Regel 1:5 bis 5:1, vorzugsweise 4:6 bis 6:4. Die Reaktion kann je nach gewünschter Eigenschaft des hydroformylierten Polymers, bis zum gewünschten Umsatz geführt werden. Die Umsatzbestimmung kann beispielsweise über die Carbonylzahl nach DIN 53173 erfolgen.

Die nach dem erfindungsgemäßen Verfahren erhältlichen Polymerdispersionen sowie die Polymerisate selbst sind weitere Gegenstände der vorliegenden Erfindung. Die Polymerisate zeichnen sich dadurch aus, daß die Doppelbindungen gleichmäßig im gesamten Polymerisatteilchen hydroformyliert wurden.

Je nach gewünschtem Verwendungszweck werden die Polymerdispersionen direkt verwendet, oder das Polymerisat wird isoliert. Auch besteht die Möglichkeit in der Polymerdispersion eine Folgereaktion, die zur Modifizierung der neu gewonnenen Aldehydfunktionen führt, durchzuführen. Beispielsweise kann die Aldehydfunktion durch Einsatz von Wasserstoff in Gegenwart eines geeigneten Katalysators, beispielsweise eines der genannten Hydroformylierungskatalysatoren, und Wasserstoff, gegebenenfalls unter erhöhtem Druck, zur Alkoholfunktion hydriert werden. Auch ist ihre Oxidation zu Carbonsäurefunktionen möglich. Weiterhin lassen sich die Aldehydfunktionen in Gegenwart von Alkoholen acetalisieren, in Imine umwandeln, reduktiv aminieren oder durch sukzessive Umsetzung mit Hydroxylamin und nachfolgender Dehydratisierung in Nitrilgruppen umwandeln. Hierdurch werden einerseits neue Reaktionszentren mit neuen Reaktivitäten geschaffen. Andererseits ist es möglich, die Aldehydfunktion durch Verwendung von Polyolen im Sinne einer Art Vulkanisation zu vernetzen.

Die im folgenden aufgeführten Beispiele sollen die Erfindung verdeutlichen, ohne sie jedoch einzuschränken.

### Beispiele

### Herstellung butadienhaltiger Polymerdispersionen

### Beispiel 1:

Die Polymerisation erfolgte nach dem Verfahren der halbkontinuierlichen radikalischen Emulsionspolymerisation. Die Reaktion wurde in einem mit einem Rührer ausgerüsteten Druckgefäß mit Mantelkühlung durchgeführt.
Vorlage:
   - 0,75 g: EDTA
   - 375 g: Natriumperoxidsulfat
   - 380 g: von Zulauf 1
   - 22,1 kg: vollentsalztes Wasser
Zulauf 1:
   - 2325 g: Butadien
   - 4875 g: Styrol
   - 150 g: Methacrylsäure
   - 150 g: Acrylsäure
   - 112 g: tertiär-Dodecylmercaptan
Zulauf 2:
   - 18,75 g: Natriumperoxidsulfat
   - 22,5 g: Natriumpyrophosphat
   - 1250 g: vollentsalztes Wasser

Die Vorlage wurde unter Rühren auf 82°C geheizt. Nach Erreichen der Temperatur wurde mit der Dosierung der Zuläufe unter fortgesetztem Rühren begonnen. Zulauf 1 wurde in 2,5 Stunden, Zulauf 2 in 3,0 Stunden zudosiert. Nach Ende der Dosierung von Zulauf 2 wurde unter fortgesetztem Rühren 2 Stunden bei 82°C nachpolymerisiert. Anschließend wurde der Ansatz gekühlt und entspannt. Anschließend wurde der pH-Wert mit einer 25%igen wäßrigen Ammoniaklösung auf einen Wert von 6,5 eingestellt. Man erhielt eine stabile, wäßrige Polymerdispersion mit einen Feststoffgehalt von 32,8%. Der pH-Wert betrug 6,5. Die mittlere Größe der Polymerisatteilchen betrug 198 nm. Der Polybutadienanteil der Dispersion betrug 28,9%, bezogen auf den Feststoffanteil.

### Beispiel 2:

Die Polymerisation erfolgte nach dem Verfahren der halbkontinuierlichen radikalischen Emulsionspolymerisation. Die Reaktion wurde in einem mit einem Rührer ausgerüsteten Druckgefäß mit Mantelkühlung durchgeführt.
Vorlage:
   - 1,7 kg: Polystyrolsaatdispersion (Festgehalt 35%, Teilchengröße: 38 nm, stabilisiert mit 10% Dodecylbenzolsulfonsäurenatriumsalz.
   - 5%: von Zulauf 1
   - 5%: von Zulauf 2
   - 17,0 kg: vollentsalztes Wasser
Zulauf 1:
   - 25,7 kg: Butadien
   - 22,25 kg: Styrol
   - 1,5 kg: Acrylsäure
   - 0,5 kg: Acrylamid
   - 0,45 kg: tertiär-Dodecylmercaptan
   - 1,1 kg: Emulgator Texapon® NSO (Handelsprodukt der Firma Henkel)
   - 0,6 kg: Tetranatriumpyrophosphat
   - 17,26 kg: vollentsalztes Wasser
Zulauf 2:
   - 0,5 kg: Natriumperoxodisulfat
   - 7,0 kg: Wasser

Die Vorlage wurde unter Rühren innerhalb 15 Minuten auf 82°C geheizt und 30 Minuten anpolymerisiert. Anschließand wurde bei 82°C unter Rühren der restliche Zulauf 1 während 5,5 Stunden, und, gleichzeitig mit Zulauf 1 beginnend, der restliche Zulauf 2 während 6,0 Stunden zugegeben. Anschließend wurde bei 85°C 2,5 Stunden nachpolymerisiert. Nach Abkühlung und Entspannung der Dispersion wurde der pH-Wert mit 25%iger wäßriger Ammoniaklösung auf 5,4 eingestellt. Man erhielt eine stabile wäßrige Dispersion mit einem Feststoffgehalt von 48,3%. Die Teilchengröße betrug 163 nm.

Der Polybutadiengehalt errechnet sich aus der eingesetzten Butadienmenge zu 50,0%, bezogen auf den Feststoffgehalt.

### Beispiel 3:

Die Polymerisation erfolgte nach dem Verfahren der halbkontinuierlichen radikalischen Emulsionspolymerisation. Die Reaktion wurde in einem mit einem Rührer ausgerüsteten Druckgefäß mit Mantelkühlung durchgeführt.
Vorlage:
   - 2,8 kg: Polystyrolsaatdispersion (Festgehalt 35%, Teilchengröße: 38 nm, stabilisiert mit 10% Dodecylbenzolsulfonsäurenatriumsalz
   - 5%: von Zulauf 1
   - 10%: von Zulauf 2
   - 17,0 kg: vollentsalztes Wasser
Zulauf 1:
   - 42,5 kg: Butadien
   - 5,0 kg: Styrol
   - 1,75 kg: Acrylsäure
   - 1,5 kg: Acrylamid
   - 0,3 kg: tertiär-Dodecylmercaptan
   - 1,1 kg: Emulgator Texapon® NSO
   - 0,15 kg: Tetranatriumpyrophosphat
   - 17,26 kg: vollentsalztes Wasser
Zulauf 2:
   - 0,4 kg: Natrimperoxidsulfat
   - 7,0 kg: Wasser

Die Vorlage wurde unter Rühren innerhalb 15 Minuten auf 75°C geheizt und 30 Minuten anpolymerisiert. Anschließend wurde bei 75°C unter Rühren der restliche Zulauf 1 während 7,0 Stunden, und gleichzeitig mit Zulauf 1 beginnend der restliche Zulauf 2 während 7,5 Stunden zugegeben. Anschließend wurde bei 75°C 2,5 Stunden nachpolymerisiert. Nach Abkühlung und Entspannung der Dispersion wurde der pH-Wert mit 25%iger wäßriger Ammoniaklösung auf 6,3 eingestellt. Man erhielt eine stabile wäßrige Dispersion mit einem Festgehalt von 48,6%. Die Teilchengröße betrug 148 nm. Der Polybutadiengehalt errechnet sich aus der eingesetzten Butadienmenge mit 85%, bezogen auf den Festgehalt.

### Beispiel 4

Die Polymerisation erfolgte nach dem Verfahren der halbkontinuierlichen radikalischen Emulsionspolymerisation. Die Reaktion wurde in einem mit einem Rührer ausgerüsteten Stahlreaktor durchgeführt.
Vorlage:
   - 0,23 kg: Polystyrolsaatdispersion (Festgehalt: 29%, Teilchengröße: 28 nm stabilisiert mit 10% Dodecylbenzolsulfonsäurenatriumsalz)
   - 26,8 g: Texapon® NSO
   - 1,8 kg: wäßrige Itakonsäure-Lösung (5 gew.-%ig)
   - 2%: von Zulauf 1
   - 20%: von Zulauf 2
   - 5 kg: vollentsalztes Wasser
Zulauf 1:
   - 6,3 kg: Butadien
   - 8,0 kg: Styrol
   - 0,5 kg: Acrylsäure
   - 225 g: Acrylamid
   - 294 g: Texapon® NSO
   - 120 g: 25%ige wäßrige NaOH-Lösung
   - 5,0 kg: vollentsalztes Wasser
Zulauf 2:
   - 0,15 kg: Natriumperoxodisulfat
   - 3,0 kg: Wasser

Die Vorlage wurde innerhalb 15 Minuten angeheizt. Anschließend gab man unter Rühren Zulauf 1 und Zulauf 2 gleichzeitig beginnend innerhalb 3,5 Stunden zu und polymerisierte unter Beibehaltung der Temperatur 2 Stunden nach. Nach dem Abkühlen erhielt man eine stabile Dispersion mit einem Feststoffgehalt von 52,1%. Die Teilchengröße betrug 181 nm.

### Beispiele zur Hydroformylierung ausgewählter Polymerdispersionen

### Beispiel 5:

### Hydroformylierung von Styrol-Butadien-Copolymer-Dispersionen aus den Beispielen 1 bis 4 in Wasser (Versuche 1 bis 15)

100 ml der wäßrigen Styrol-Butadien-Copolymer-Dispersion (siehe Tabelle 1) wurde in einem Schlenkrohr unter Rühren durch Einleiten von Argon entgast. In einem weiteren Schlenkrohr löste man die jeweilig erforderliche Menge an Rhodium(II)acetat (siehe Tabelle 1) in 5 ml destilliertem Wasser und entgaste ebenfalls durch Einleiten von Argon. Diese Lösung wurde mit der Dispersion intensiv vorgemischt und in einen stickstoffgefüllten 300 ml Autoklaven mit Rührer gefüllt. Der Autoklav wurde auf 100°C erhitzt, dabei wurde durch Einleiten eines Kohlenmonoxid-Wasserstoff-Gemisches (molares Verhältnis 1:1) der Druck auf 280 bar erhöht. Durch Reaktion eines Teiles des Gasgemisches fiel während der Reaktion der Druck im Autoklaven ab und wurde für die gewünschte Verweilzeit durch weiteres Einleiten des Wasserstoff/Kohlenmonoxid-Gemisches beibehalten. Nach der gewünschten Reaktionszeit wurde die Heizung und Gaszufuhr abgestellt und der abgekühlte Autoklav über ein Steigrohr in ein Argon-gefülltes Schlenkrohr entleert. Das Produkt bildet weiterhin Polymerdispersion. Die Ergebnisse sind in Tabelle 1 zusammengefaßt.

**Tabelle 1**

| Die Hydroformylierungsbedingungen sind in der Tabelle genannt. Der Hydroformylierungserfolg wurde durch IR-Spektroskopie und die Bestimmung der Carbonylzahl (nach DIN 53173) überprüft. | | | | | | | |
|---|---|---|---|---|---|---|---|
| Versuch | Disp. aus Beispiel | Rh/Dispersion [mg/kg]⁺ | VWZ (h) | Druck (bar) | Temp. (°C) | IR-Bande bei 1726 cm⁻¹ | CO-Zahl* |
| 1 | 1 | 250 | 5 | 280 | 100 | stark | 11 |
| 2 | 1 | 50 | 5 | 280 | 100 | mittel | 6 |
| 3 | 1 | 50 | 1 | 280 | 100 | mittel | 4 |
| 4 | 1 | 0 | Blindprobe | | | keine | <1 |
| 5 | 2 | 250 | 5 | 280 | 100 | stark | 25 |
| 6 | 2 | 50 | 5 | 280 | 100 | mittel | 10 |
| 7 | 2 | 50 | 1 | 280 | 100 | mittel | 9 |
| 8 | 2 | 5 | 1 | 280 | 100 | schwach | 1 |
| 9 | 2 | 0 | Blindprobe | | | keine | <1 |
| 10 | 3 | 50 | 5 | 280 | 100 | mittel | 12 |
| 11 | 3 | 25 | 5 | 280 | 100 | mittel | 10 |
| 12 | 3 | 5 | 5 | 280 | 100 | schwach | 2 |
| 13 | 3 | 0 | Blindprobe | | | keine | <1 |
| 14 | 4 | 50 | 5 | 280 | 100 | stark | 51 |
| 15 | 4 | 0 | Blindprobe | | | keine | <1 |

| | | | | | | | |
|---|---|---|---|---|---|---|---|
| ⁺ bezogen auf die Dispersion | | | | | | | |
| * CO-Zahl: Carbonylzahl [mg KOH/g Dispersion] | | | | | | | |

### Analytik:

### Teilchengröße des Polymerisats:

Die Teilchengröße (Z-Mittelwert) der Polymerisatteilchen wurde durch dynamische Lichtstreuung an einer 0,01 gew.-%igen Dispersion bei 23°C mittels eines Autosizer IIc der Fa. Malvern Instruments, England, ermittelt. Angegeben wird der mittlere Durchmesser der Kumulantenauswertung (cumulant z-average) der gemessenen Autokorrelationsfunktion.

### IR-Spektroskopie:

Zur IR-spektroskopischen Untersuchung wurden die durch die Versuche 1 bis 15 erhaltenen Dispersionen mit Wasser verdünnt und auf ein ZnS-Fenster aufgetragen. Anschließend wurden die Fenster bei 40°C getrocknet. Die Aufnahme der Spektren erfolgte mit einem Biorad FTS-7 Spektrometer mit angeschlossener SPC-3200 Auswertestation.

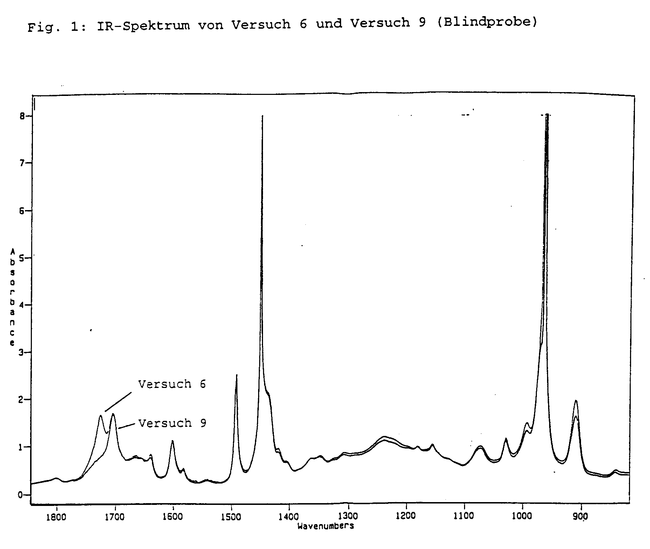

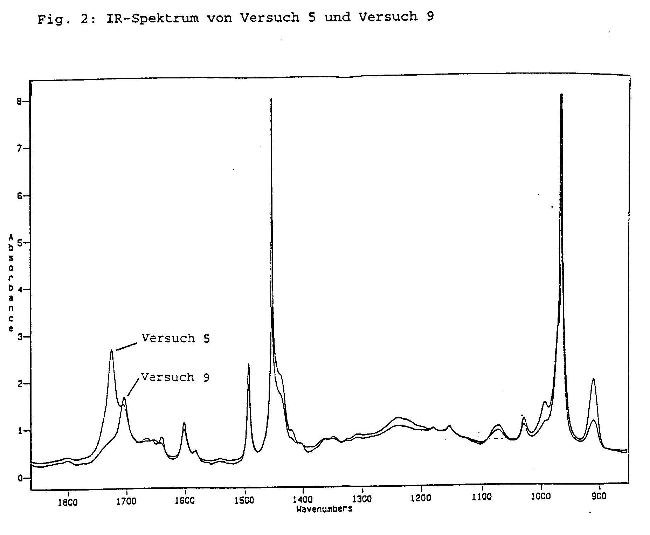

Ausgewertet wurde die Bande der C=O-Streckschwingung bei 1726 cm⁻¹, die für Aldehydgruppen typisch ist. Entsprechend wurde beobachtet, daß das Signal bei 910 cm⁻¹, das auf 1,2-Polybutadien zurückzuführen ist, mit zunehmender Umsetzung abnahm (Verbrauch der C=C-Gruppen durch Hydroformylierung) (siehe Fig. 1 und 2).

## Patentansprüche

1. Verfahren zur Hydroformylierung von Polymerisaten, die ethylenisch ungesättigte Doppelbindungen enthalten, durch Umsetzung der Polymerisate mit Kohlenmonoxid und Wasserstoff in Gegenwart eines Hydroformylierungskatalysators, dadurch gekennzeichnet, daß man die Umsetzung in einer wäßrigen Dispersion der Polymerisate unter solchen Bedingungen durchführt, daß der Katalysator wenigstens teilweise in die Polymerphase oder wenigstens in die Phasengrenze Polymer/Wasser eindringt.

2. Verfahren nach Anspruch 1, dadurch gekennzeichnet, daß man als Katalysator Salze oder Komplexverbindungen des Kobalts, Rhodiums, Rutheniums, Osmiums, Iridiums, Palladiums oder des Platins verwendet.

3. Verfahren nach Anspruch 1 oder 2, dadurch gekennzeichnet, daß man als Katalysator ein Salz oder eine Komplexverbindung des Rhodiums, insbesondere ein Rhodiumcarboxylat, Rhodiumoxid, Salze der Rhodiumsäure oder Ammoniumhalogenkomplexe des Rhodiums, verwendet.

4. Verfahren nach einem der Ansprüche 1 bis 3, dadurch gekennzeichnet, daß die Polymerdispersionen Homo- oder Copolymerisate konjugierter Diene enthalten, die zu
10 bis 100 Gew.-% aus wenigstens einem konjugierten Dien A und zu
0 bis 90 Gew.-% aus wenigstens einem, mit dem Dien A copolymerisierbaren, monoethylenisch ungesättigten Monomer B aufgebaut sind.

5. Verfahren nach einem der Ansprüche 1 bis 3, dadurch gekennzeichnet, daß die Polymerdispersionen Copolymerisate enthalten, die als Hauptbestandteil monoethylenisch ungesättigte Monomere B und als Nebenbestandteil nicht konjugierte Diene oder Polyene C einpolymerisiert enthalten.

6. Verfahren nach einem der vorhergehenden Ansprüche, dadurch gekennzeichnet, daß man die Umsetzung bei Temperaturen im Bereich von Raumtemperatur bis 200°C und einem Partialdruck des Reaktionsgases (Wasserstoff + Kohlenmonoxid) im Bereich von 1 bis 600 bar durchführt.

7. Verfahren nach Anspruch 6, wobei die Temperaturen im Bereich von 50 bis 150°C und der Druck im Bereich von 20 bis 300 bar gewählt wird.

8. Verfahren nach einem der vorhergehenden Ansprüche, dadurch gekennzeichnet, daß das Molverhältnis H₂:CO im Bereich von 1:5 bis 5:1 liegt.

9. Polymerdispersionen, erhältlich durch ein Verfahren nach einem der vorhergehenden Ansprüche.

10. Polymerisate, erhältlich aus den Polymerdispersionen nach Anspruch 9 durch Entfernen des wäßrigen Lösungsmittels.

11. Verwendung der Polymerdispersionen nach Anspruch 9 oder der Polymerisate nach Anspruch 10 als Modifikatoren für Polymermischungen.
